(19) Europäisches Patentamt

European Patent Office

Office européen des brevets

(11) **EP 0 753 196 B1**

(12) **EUROPÄISCHE PATENTSCHRIFT**

(45) Veröffentlichungstag und Bekanntmachung des Hinweises auf die Patenterteilung:
**30.09.1998 Patentblatt 1998/40**

(21) Anmeldenummer: **95914272.0**

(22) Anmeldetag: **28.03.1995**

(51) Int Cl.[6]: **G21F 9/06**, C02F 1/32

(86) Internationale Anmeldenummer:
**PCT/DE95/00417**

(87) Internationale Veröffentlichungsnummer:
**WO 95/26555 (05.10.1995 Gazette 1995/42)**

(54) **VERFAHREN UND EINRICHTUNG ZUM ENTSORGEN EINER LÖSUNG, DIE EINE ORGANISCHE SÄURE ENTHÄLT**

METHOD AND DEVICE FOR DISPOSING OF A SOLUTION CONTAINING AN ORGANIC ACID

PROCEDE ET DISPOSITIF PERMETTANT D'ELIMINER UNE SOLUTION CONTENANT UN ACIDE ORGANIQUE

(84) Benannte Vertragsstaaten:
**BE CH DE ES FR LI NL SE**

(30) Priorität: **28.03.1994 DE 4410747**

(43) Veröffentlichungstag der Anmeldung:
**15.01.1997 Patentblatt 1997/03**

(73) Patentinhaber: **SIEMENS AKTIENGESELLSCHAFT
80333 München (DE)**

(72) Erfinder:
- **BERTHOLDT, Horst-Otto
D-91336 Heroldsbach (DE)**
- **BEGE, Dietmar
D-91056 Erlangen (DE)**

(56) Entgegenhaltungen:
**EP-A- 0 543 112          WO-A-91/13032
WO-A-92/03829        DE-A- 3 501 528
NL-A- 9 001 721**

- DATABASE INSPEC INSTITUTE OF ELECTRICAL ENGINEERS, STEVENAGE, GB Inspec No. AN-4487274, TRANS.AM. NUCL. SOC. (USA), 1993 WESTINGHOUSE HANFORD 'hanford site treated effluent disposal facility process flow sheet' & AMERICAN NUCLEAR SOCIETY, 20.Juni 1993 - 24.Juni 1993 SAN DIEGO, CA,USA
- DATABASE INSPEC INSTITUTE OF ELECTRICAL ENGINEERS, STEVENAGE, GB Inspec No. an 3876109, , 1990 EVANS 'Treatment and disposal of steam generator and heat exchanger chemical cleaning wastes' & WASTE MANAGEMENT 90 : WORKING TOWARD A CLEANER ENVIRONMENT. , 25.Februar 1990 - 1.März 1990 TUCSON, AZ, USA

**Beschreibung**

Die Erfindung betrifft ein Verfahren zum Entsorgen einer wäßrigen Lösung, die eine organische Säure und einen Eisenkomplex enthält und insbesondere bei der Dekontamination radioaktiv kontaminierter Oberflächen von Bauteilen anfällt. Die Erfindung betrifft auch eine Einrichtung zum Entsorgen einer wäßrigen Lösung mit einem Behälter für die Lösung, die eine organische Säure und einen Eisenkomplex enthält und insbesondere bei der Dekontamination radioaktiv kontaminierter Oberflächen von Bauteilen anfällt.

Ein Verfahren und eine Einrichtung zur Entsorgung einer organischen Substanz ist aus der DE-A- 41 26 971 bekannt. Mit diesem Verfahren und mit der dazugehörigen Einrichtung werden organische Säuren behandelt, die bei der Oberflächendekontamination radioaktiv kontaminierter Bauteile eingesetzt worden sind.

Nach einer solchen Dekontamination verbleibt eine Lösung, die neben dem Säureanteil, der chemisch unverändert ist, bei der Dekontamination gebildete Chemikalien und auch von der Bauteiloberfläche entfernte radioaktive Stoffe enthält. Eine derartige Lösung muß verfestigt und in Fässern endgelagert werden.

Damit man mit einem möglichst kleinen Endlager auskommt, wird angestrebt, daß das Volumen der Lösung vor dem Verfestigen verkleinert wird.

Es ist bekannt, daß der Lösung, während sie mit einem Katalysator in Kontakt steht, Wasserstoffperoxid zugeleitet wird. Es entstehen dann als wesentliche Zersetzungsprodukte Kohlenstoffdioxid und Wasser. Die Konzentration der Lösung wird dadurch verringert, so daß nach einem Verdampfungsschritt nur noch ein relativ kleines Volumen verbleibt, das verfestigt und einem Endlager zugeführt werden muß.

Das bekannte Verfahren und die dazugehörige Einrichtung benötigen zum Entsorgen der organischen Substanz einen Katalysator. Ein solcher Katalysator muß mit der Substanz in Kontakt gebracht werden. Dazu muß fester Kanalysatorstoff in der zu entsorgenden Lösung schwebend gehalten werden. Eine Variante dazu benötigt eine aufwendige Halterung für den Katalysator.

Während einer Dekontamination fallen Metalle in anionischer und kationischer Form an. Zum Entfernen dieser Metallionen ist es üblich, Anionen- und Kationenaustauscher einzusetzen. Mit einem Anionenaustauscher werden dabei anionische Metallkomplexe und auch Dekontaminationschemikalien entfernt. Dazu ist ein großer Anionenaustauscher erforderlich. Das führt zu einer großen Menge an Ionenaustauscherharz, die entsorgt werden muß.

Die verbleibende Lösung wird in der Regel eingedampft und das dadurch entstehende Konzentrat wird endgelagert. Das dekontaminierte System wird abschließend noch gespült und das Spülwasser wird eingedampft. Es müssen also sehr große Lösungs- bzw. Wassermengen behandelt werden.

WO-A-9113032 und NL-A-9001721 beschreiben die Entfernung von organischen Stoffen aus wäßrigen Lösungen, wobei eine UV-Bestrahlung, der Zusatz eines Oxidationsmittels (insbesondere Wasserstoffperoxid) und eines Eisensalzes vorgesehen ist. Organische Säuren sind in D1 und D2 ebenso wenig erwähnt wie die Notwendigkeit der Bildung eines Komplexes zwischen der organischen Verbindung und Eisen (gemäß Anspruch 1 von D1 sollen nur Übergangsmetallionen allgemein vorhanden sein); ein Kreisprozeß ist in D1 oder D2 auch nicht vorgesehen. Die Entfernung von Eisenionen mittels eines Kationenaustauschers ist in keinem der beiden Dokumente beschrieben.

Der Erfindung lag die Aufgabe zugrunde, ein Verfahren zum Entsorgen einer wäßrigen Lösung, die eine organische Säure enthält, anzugeben, das ohne Einsatz eines aufwendigen Katalysators auskommt. Es soll auch eine geeignete Einrichtung zum Entsorgen einer solchen wäßrigen Lösung angegeben werden.

Insbesondere sollen nach einer Dekontamination nur wenig Ionenaustauscherharz und keine großen Lösungsmengen anfallen, die entsorgt werden müßten.

Die als erste genannte Aufgabe wird gemäß der Erfindung dadurch gelöst, daß die Lösung mit UV-Licht bestrahlt wird, wodurch der Eisenkomplex reduziert und ein gelöstes Eisensalz und Kohlenstoffdioxid gebildet werden, daß ein Teil des gelösten Eisensalzes mittels eines Kationenaustauschers aus der Lösung entfernt wird, daß aus einem anderen Teil des gelösten Eisensalzes, einem Teil der Säure und einem zugegebenen Oxidationsmittel Wasser und erneut der Eisenkomplex gebildet werden und daß die verbleibende den Eisenkomplex und noch nicht zerstörte organische Säure enthaltende Lösung erneut mit UV-Licht bestrahlt wird und in einem Kreisprozeß fortgefahren wird bis keine organische Säure mehr vorhanden ist.

Der in der zu entsorgenden wäßrigen Lösung enthaltene Eisen-komplex ist z.B. bei einer Dekontamination in diese Lösung hinein gelangt. Eine solche Lösung kann auch Chromkomplexe und Nickelkomplexe enthalten, die anstelle eines Eisenkomplexes zum Entsorgen einer wäßrigen Lösung, die eine organische Säure enthält, beitragen können.

Mit dem Verfahren nach der Erfindung wird der Vorteil erzielt, daß die organische Säure, die sich in der Lösung befindet, weitgehend rückstandsfrei in Kohlenstoffdioxid und Wasser umgewandelt wird, ohne daß ein Katalysator erforderlich wäre. Das Verfahren zum Entsorgen der organischen Säure kann schon während der Dekontamination eingeleitet werden. Es sind keine aufwendigen Anlagen erforderlich. Das Verfahren kann z.B. direkt in dem Behälter durchgeführt werden, der dekontaminiert wird. Das Kohlenstoffdioxid kann, da es frei von radioaktiven Stoffen ist, abgegeben werden.

Der erneut gebildete Eisenkomplex wird beim Verfahren nach der Erfindung vorteilhafterweise wieder verwendet.

Dadurch ist ein Kreisprozeß gegeben.

Bedingt durch den Kreisprozeß werden die anionischen Eisenkomplexe vorteilhafterweise in Eisenkationen überführt. Es muß daher nur ein Kationenaustauscher und kein Anionenaustauscher eingesetzt werden.

Die Menge des zu entsorgenden Ionenaustauscherharzes orientiert sich vorteilhafterweise nur an dem tatsächlichen Kationenausstoß des zu dekontaminierenden Systems. Die Harzmenge ist im Vergleich zur Harzmenge, die bei bekannten Dakontaminationsverfahren anfällt, um ca. den Faktor 20 kleiner. Das gilt dann, wenn das Verfahren nach der Erfindung zum Entsorgen einer beladenen Dekontaminationslösung eingesetzt wird. Die kleine Harzmenge benötigt nur ein kleines Endlager.

Mit dem Verfahren nach der Erfindung kann die Lösung vorteilhafterweise soweit gereinigt werden, daß sie für den späteren Betrieb des dekontaminierten Systems, z.B. als Kühlmittel, wiederverwendet werden kann.

Das aufwendige Entsorgen der Lösung mit einem Verdampfungsschritt entfällt. Auch braucht das dekontaminierte System nicht gespült zu werden, wobei große Mengen später zu verdampfende Wassermengen anfallen würden.

Die zu entsorgende Lösung enthält in der Regel bereits einen Eisenkomplex. Dieser bildet sich aus einem Teil der zu entsorgenden organischen Säure und aus Eisenionen, die ohnehin in der zu entsorgenden Lösung vorhanden sind. Diese Eisenionen können beispielweise während des Kontaminationsvorganges oder auch schon davor in den zu dekontaminierenden Behälter hineingelangt sein.

Falls doch keine Eisenionen in der Lösung vorhanden wären, kann der Lösung beispielsweise zum Überführen eines Teils der Säure in einen Eisenkomplex ionisiertes Eisen (Eisenionen) beigemischt werden. Dazu kann beispielsweise ein Eisensalz in die Lösung eingebracht werden, das dort ionisiert und dadurch unter anderem Eisenionen bildet. Durch die Zugabe von Eisenionen wird der Vorteil erzielt, daß selbst dann, wenn Eisenionen in der Lösung fehlen sollten, genügend Eisenionen bereitgestellt werden, um einen Teil der Säure in einen Eisenkomplex zu überführen.

Beispielsweise hat das ionisierte Eisen eine bestimmte Wertigkeit und bildet mit einem Teil der Säure einen Eisenkomplex, bei dem das Eisen die gleiche Wertigkeit hat (Eisenkomplex der gleichen Wertigkeit).

Zum Beispiel ist das ionisierte Eisen dreiwertig und bildet mit einem Teil der organischen Säure einen Eisen III-Komplex.

Durch Bestrahlung mit UV-Licht wird dieser Komplex unter Bildung von Kohlenstoffdioxid in ein gelöstes Eisensalz umgewandelt, bei dem die Wertigkeit des Eisens beispielsweise um 1 kleiner ist als die Wertigkeit des Eisens im Komplex. (Eisensalz, dessen Wertigkeit um 1 kleiner ist als die Wertigkeit des Eisenkomplexes). Dieses gelöste Eisensalz, der Rest der Säure und ein Oxidationsmittel, das zugegeben wird, bilden den Eisenkomplex neu. Außerdem wird Wasser gebildet.

Ein Eisen-III-Komplex z.B. wird in ein gelöstes Salz des zweiwertigen Eisens (zweiwertiges Eisensalz) umgewandelt. Dieses gelöste zweiwertige Eisensalz, der Rest der organischen Säure und ein Oxidationsmittel, das zugegeben wird, reagieren chemisch und bilden Wasser und erneut den Eisen-III-Komplex. Dieser Eisen-III-Komplex entspricht dem zuvor vorhandenen Eisen-III-Komplex. Der Eisen-III-Komplex wird also regeneriert.

Falls nicht der gesamte Rest der organischen Säure chemisch mit dem Eisensalz und dem Oxidationsmittel reagiert hat, weii z.B. die Eisensalzmenge nicht ausgereicht hat, können aus dem regenerierten Eisen-Komplex durch Bestrahlung mit UV-Licht erneut Kohlenstoffdioxid und das benötigte gelöste Eisensalz gebildet werden. Das Eisensalz reagiert dann mit zugegebenem Oxidationsmittel und noch verbliebener organischer Säure unter erneuter Bildung des Eisen-Komplexes und von Wasser. Es ergibt sich vorteilhafterweise ein Kreisprozeß, der solange läuft bis die gesamte organische Säure in eine relativ geringe Menge Eisensalz, das mit dem Kationenaustauscher entfernt wird, und in Kohlenstoffdioxid und Wasser umgewandelt ist. Kohlenstoffdioxid und Wasser werden abgegeben.

Ein entsprechender Kreisprozeß ist auch bei Verwendung eines anderen ionisierten Metalls möglich.

Falls die organische Säure z.B. Oxalsäure ist, ergeben sich folgende Reaktionsgleichungen:

$$(1) \qquad 3H_2C_2O_4 + Fe^{III} \rightarrow [Fe^{III}(C_2O_4)_3]^{3-}$$

Oxalsäure + dreiwertiges Eisen → Eisen-III-Komplex

$$(2) \qquad [Fe^{III}(C_2O_4)_3]^{3-} + UV \rightarrow Fe^{II}(C_2O_4)_2 + 2\,CO_2$$

Eisen-III-Komplex + UV → zweiwertiges Eisensalz + $CO_2$

$$(3) \qquad Fe^{II}(C_2O_4)_2 + H_2C_2O_4 + H_2O_2$$

zweiwertiges Eisensalz + Oxalsäure + Wasserstoffperoxid

$$\rightarrow [Fe^{III}(C_2O_4)_3]^{3-} + 2\,H_2O$$

$$\rightarrow \text{Eisen-III-Komplex} + H_2O$$

Der in der Reaktionsgleichung (3) gebildete Eisen-III-Komplex wird erneut in der Reaktionsgleichung (2) eingesetzt. Die beiden Reaktionsgleichungen (2) und (3) wechseln sich ab, bis die gesamte Oxalsäure verbraucht ist. Es verbleibt dann neben $CO_2$ und $H_2O$ nur eine geringe Menge des zweiwertigen Eisensalzes.

Ein entsprechender Kreisprozeß ist auch mit jedem anderen Metallkomplex möglich, der am Beginn durch ein ionisiertes Metall gebildet werden kann.

Zur Durchführung des Kreisprozesses ist kein besonderer Behälter erforderlich. Er kann sogar in dem gerade zuvor dekontaminierten Behälter durchgeführt werden.

Die organische Säure, die nicht in das zweiwertige Eisensalz umgewandelt wird, wird durch den Kreisprozeß vorteilhafterweise vollständig in Wasser und Kohlenstoffdioxid umgewandelt, die keiner aufwendigen Entsorgung bedürfen. Das Kohlenstoffdioxid kann abgegeben werden.

Das Oxidationsmittel kann beispielsweise Wasserstoffperoxid oder Ozon sein, die besonders geeignet sind.

Die Konzentration des Oxidationsmittels liegt beispielsweise zwischen 0,002 Mol/l und 0,02 Mol/l, insbesondere zwischen 0,005 Mol/l und 0,007 Mol/l. Bei einer deutlich höheren Wasserstoffperoxidkonzentration würde aufgrund der UV-Absorption des Wasserstoffperoxids weniger organische Säure umgewandelt werden.

Eine besonders geeignete Wellenlänge des eingesetzten UV-Lichtes liegt zwischen 250 Nanometer und 350 Nanometer.

Die zweite gestellte Aufgabe, eine geeignete Einrichtung zum Entsorgen einer wäßrigen Lösung mit einem Behälter für die Lösung, die eine organische Säure und einen Eisenkomplex enthält und insbesondere bei der Dekontamination radioaktiv kontaminierter Oberflächen von Bauteilen anfällt, anzugeben, wird gemäß der Erfindung dadurch gelöst, daß vom Behälter eine Kreisleitung ausgeht und in ihn einmündet, daß die Kreisleitung eine UV-Bestrahlungskomponente enthält und daß eine Zuleitung für ein Oxidationsmittel, die eine Dosiervorrichtung umfaßt, und ein Kationenaustauscher der Kreisleitung zugeordnet sind.

In der UV-Bestrahlungskomponente wird bewirkt, daß ein Eisen-komplex, der in der Lösung vorhanden ist, reduziert wird, so daß ein gelöstes Eisensalz und Kohlenstoffdioxid gebildet werden. Das Kohlenstoffdioxid wird als Gas über eine Ableitung abgegeben. Mit Hilfe der Dosiervorrichtung wird anschließend über die Zuleitung eine geeignete Menge des Oxidationsmittels eingespeist. Die Zuleitung kann über den Behälter oder direkt mit der UV-Bestrahlungskomponente in Verbindung stehen oder an einem anderen Punkt in die Kreisleitung einmünden. Es ist dadurch gewährleistet, daß das Oxidationsmittel dorthin gelangt, wo sich zu diesem Zeitpunkt die Lösung befindet, die das gelöste Eisensalz und die organische Säure enthält.

Nach dem Einspeisen des Oxidationsmittels wird neben Wasser der Eisenkomplex neu gebildet. Dieser Eisenkomplex entspricht dem Eisenkomplex, der zuvor bereits vorhanden war. Dadurch ist sichergestellt, daß ein Kreisprozeß ablaufen kann. Der Eisenkomplex wird dann erneut mit UV-Licht bestrahlt und dadurch reduziert. Es bilden sich wieder ein gelöstes Eisensalz und Kohlenstoffdioxid und aus dem Eisensalz zusammen mit restlicher Säure und dem Oxidationsmittel bilden sich erneut der Eisenkomplex sowie Wasser. Dieser Kreisprozeß kann solange ablaufen, bis die gesamte Säure verbraucht ist.

Mit dem Behälter oder der Kreisleitung kann eine Zuleitung für eine Eisenionen enthaltende Lösung über eine Dosiervorrichtung verbunden sein. Über diese Zuleitung wird eine Eisenionen enthaltende Lösung zum Beginn des Verfahrens eingespeist, falls in der im Behälter befindlichen Lösung nicht ohnehin Eisenionen vorhanden sind. Meistens sind jedoch Eisenionen vorhanden. Falls in der Lösung keine Eisenionen vorhanden wären, konnte auch kein Eisenkomplex vorhanden sein, der aus den Eisenionen und einem Teil der zu entsorgenden Säure gebildet wird.

Da vorteilhafterweise keine störenden Anionen vorhanden sind, kann mit dem Kationenaustauscher die verbleibende Lösung soweit gereinigt werden, daß sie z.B. als Kühlmittel wiederverwendet werden kann. Es sind daher keine Verdampfer erforderlich und es müssen folglich auch keine Verdampferrückstände beseitigt werden.

In der Kreisleitung läuft ein chemischer Kreisprozeß so lange ab bis auch die Teilmenge der organischen Säure, die eventuell bei einem Durchgang zurückbleibt, umgewandelt ist. Das ist möglich, da der Eisenkomplex im Kationenaustauscher nicht zurückgehalten wird. Wenn die gesamte Säure verbraucht ist, wird kein Eisenkomplex mehr gebildet. Es bleibt dann eventuell ein kleiner Rest des Eisensalzes in der Lösung. Der kationische Teil dieses Eisensalzes wird jedoch durch den Kationenaustauscher aus der Lösung entfernt. Ebenso werden radioaktive Kationen, die in der Lösung seit einem Dekontaminationsverfahren vorhanden sein können, durch den Kationenaustauscher entfernt. Die verbleibende Lösung braucht nicht weiterbehandelt zu werden und kann sofort als Kühlmittel wiederverwendet werden.

Mit dem Verfahren und der Einrichtung nach der Erfindung wird insbesondere der Vorteil erzielt, daß in einem chemischen Kreisprozeß eine organische Säure ohne Einsatz aufwendiger Katalysatortechnik weitgehend in Kohlenstoffdioxid und Wasser umgewandelt werden kann. Darüber hinaus sind nach einer erfolgten Dekontamination zur Beseitigung der Reststoffe weder ein Anionenaustauscher noch ein Verdampfer erforderlich.

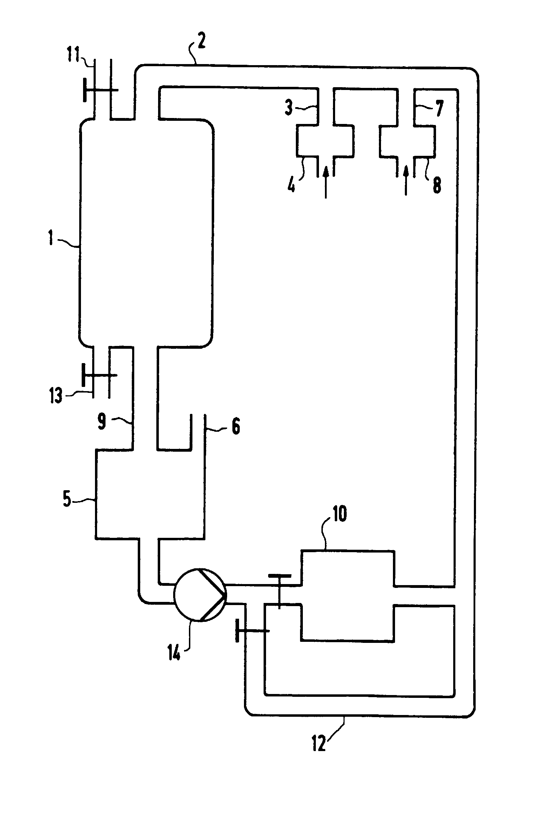

Die Einrichtung zum Entsorgen einer wäßrigen Lösung, die eine organische Säure enthält, wird anhand der Zeichnung näher erläutert:

Die Zeichnung zeigt einen Behälter 1, der ein zu dekontaminierender Behälter sein kann und ein Teil einer Kreisleitung 2 ist. Nach erfolgter Dekontamination verbleibt im Behälter 1 in einer Lösung eine organische Säure, die entsorgt werden muß. Der Behälter 1 kann aber auch ein separater Behälter sein, in den eine wäßrige Lösung, die die organische Säure enthält, zum Entsorgen eingefüllt wird. Der Behälter 1 weist eine Einfüllöffnung 11 auf, durch die dann die zu entsorgende Lösung eingefüllt wird. Falls die Dekontamination im Behälter 1 stattfindet, gelangen vor der Dekontamination durch diese Öffnung die Dekontaminationschemikalien in den Behälter 1. Für den Fall, daß in der Lösung, die entsorgt werden soll, kein Eisenkomplex enthalten sein sollte, ist eine Zuleitung 3 für Eisenionen, die in der Form eines gelösten Eisensalzes eingespeist werden können, vorgesehen. Diese Zuleitung 3 enthält eine Dosiervorrichtung 4 und mündet in die Kreisleitung 2 ein. Sie kann auch direkt in den Behälter 1 münden. Durch das ionisierte Eisen wird ein Teil der organischen Säure, die sich in der Lösung befindet, in einen Eisenkomplex überführt.

Mit einer Ableitung 9 des Behälters 1, die ein Teil der Kreisleitung 2 ist, ist eine UV-Bestrahlungskomponente 5 verbunden. Durch Bestrahlung mit UV-Licht wird dort der Eisenkomplex in der Lösung reduziert, so daß ein gelöstes Eisensalz und Kohlenstoffdioxid gebildet werden. Das Kohlenstoffdioxid verläßt die UV-Bestrahlungskomponente 5 über eine mit ihr verbundene Ableitung 6. Das Kohlenstoffdioxid kann, da es keine kontaminierten Stoffe enthält, abgegeben werden.

Über eine Zuleitung 7 für Oxidationsmittel gelangt dann Oxidationsmittel in die Kreisleitung 2, in der sich zu diesem Zeitpunkt das gelöste Eisensalz und der Rest der organischen Säure befinden. Die Zudosierung des Oxidationsmittels erfolgt durch eine Dosiervorrichtung 8, die sich in der Zuleitung 7 befindet. Die Zuleitungen 3 und/oder 7 können auch an einem nicht gezeigten Ort in Strömungsrichtung vor der UV-Bestrahlungskomponente 5 oder aber direkt in die UV-Bestrahlungskomponente 5 einmünden. Aus dem gelösten Eisensalz, einem Teil der Säure und dem Oxidationsmittel bilden sich Wasser und erneut ein Eisenkomplex, der dem zuvor genannten Eisenkomplex entspricht. Ab diesem Zeitpunkt kann sich ein Kreisprozeß wiederholen: Der Eisenkomplex wird erneut durch das UV-Licht reduziert, wobei sich gelöstes Eisensalz und Kohlenstoffdioxid bilden. Daraufhin wirkt wieder Oxidationsmittel ein, so daß aus diesem, dem Eisensalz und einem weiteren Teil der Säure erneut der Eisenkomplex und Wasser gebildet werden. Schließlich ist nach mehreren solchen Kreisprozessen die gesamte Säure in Kohlenstoffdioxid, Wasser und eine kleine Menge des Eisensalzes umgewandelt.

Falls die zu entsorgende Lösung eine Dekontaminationslösung war, enthält die verbleibende Lösung noch die durch die Dekontamination entfernten radioaktiven Stoffe. Diese Stoffe und der kationische Teil des Eisensalzes werden durch den Kationenaustauscher 10, der der UV-Bestrahlungskomponente 5 nachgeschaltet sein kann, aus der Lösung entfernt. Es ist kein Anionenaustauscher erforderlich. Trotzdem ist die verbleibende Flüssigkeit so rein, daß sie als Kühlmittel, z.B. in einem Kraftwerk, wiederverwendet werden kann. Der Kationenaustauscher 10 ist in der Kreisleitung 2 angeordnet. Er kann durch einen Bypaß 12 überbrückt sein, damit ein Teil der Lösung am Kationenaustauscher 10 vorbeigeleitet werden kann und dadurch nicht vom Eisensalz befreit wird, solange noch Eisensalz zur erneuten Bildung des Eisenkomplexes benötigt wird. In der Regel wird jedoch bei einem Durchgang nur ein Teil des Eisensalzes vom Kationenaustauscher 10 aus der Lösung entfernt.

Es ist kein Verdampfer notwendig, um Restflüssigkeit zu beseitigen. Es fallen vorteilhafterweise nur sehr wenig Ionenaustauscherharze und keine Verdampferrückstände an, die entsorgt werden müßten.

Zum Entleeren der gezeigten Einrichtung ist eine Entleerungsöffnung 13 vorhanden. In der Kreisleitung 2 kann eine Pumpe 14 vorhanden sein.

**Patentansprüche**

1. Verfahren zum Entsorgen einer wäßrigen Lösung, die eine organische Säure und einen Eisenkomplex enthält und insbesondere bei der Dekontamination radioaktiv kontaminierter Oberflächen von Bauteilen anfällt, **dadurch gekennzeichnet** , daß die Lösung mit UV-Licht bestrahlt wird, wodurch der Eisenkomplex reduziert und ein gelöstes Eisensalz und Kohlenstoffdioxid gebildet werden, daß ein Teil des gelösten Eisensalzes mittels eines Kationaustauschers aus der Lösung entfernt wird, daß aus einem anderen Teil des gelösten Eisensalzes, einem Teil der Säure und einem zugegebenen Oxidationsmittel Wasser und erneut der Eisenkomplex gebildet werden und daß die verbleibende den Eisenkomplex und noch nicht zerstörte organische Säure enthaltende Lösung erneut mit UV-Licht bestrahlt wird und in einem Kreisprozeß fortgefahren wird bis keine organische Säure mehr vorhanden ist.

2. Verfahren nach Anspruche 1, **dadurch gekennzeichnet**, daß der Lösung zum Überführen eines Teils der Säure in einen Eisen-komplex ionisiertes Eisen beigemischt wird.

3. Verfahren nach Anspruch 2,
   **dadurch gekennzeichnet**, daß der Teil der Säure durch ionisiertes Eisen einer bestimmten Wertigkeit in einen Eisenkomplex der gleichen Wertigkeit überführt wird.

4. Verfahren nach Anspruch 3,
   **dadurch gekennzeichnet**, daß der Teil der Säure durch ionisiertes dreiwertiges Eisen in einen Eisen-III-Komplex überführt wird.

5. Verfahren nach einem der Ansprüche 1 bis 4,
   **dadurch gekennzeichnet**, daß aus dem Eisenkomplex in der Lösung ein gelöstes Eisensalz, dessen Wertigkeit um 1 kleiner ist als die Wertigkeit des Eisenkomplexes, gebildet wird.

6. Verfahren nach Anspruch 5,
   **dadurch gekennzeichnet**, daß aus einem Eisen-III-Komplex in der Lösung ein gelöstes zweiwertiges Eisensalz gebildet wird, ein Teil des gelösten zweiwertigen Eisensalzes mittels eines Kationenaustauschers aus der Lösung entfernt wird und aus einem anderen Teil des gelösten Eisensalzes der Eisen-III-Komplex erneut gebildet wird.

7. Verfahren nach einem der Ansprüche 1 bis 6,
   **dadurch gekennzeichnet** , daß das Oxidationsmittel Wasserstoffperoxid oder Ozon ist.

8. Verfahren nach einem der Ansprüche 1 bis 7,
   **dadurch gekennzeichnet**, daß die Konzentration des Oxidationsmittels zwischen 0,002 Mol/l und 0,02 Mol/l ist.

9. Verfahren nach Anspruch 8,
   **dadurch gekennzeichnet**, daß die Konzentration des Oxidationsmittels zwischen 0,005 Mol/1 und 0,007 Mol/l ist.

10. Verfahren nach einem der Ansprüche 1 bis 9,
    **dadurch gekennzeichnet**, daß das UV-Licht eine Wellenlänge zwischen 250 nm und 350 nm hat.

11. Einrichtung zum Entsorgen einer wäßrigen Lösung durch ein Verfahren nach einem der Ansprüche 1 bis 10 mit einem Behälter (1) für die Lösung, die eine organische Säure und einen Eisenkomplex enthält und insbesondere bei der Dekontamination radioaktiv kontaminierter Oberflächen von Bauteilen anfällt,
    **dadurch gekennzeichnet**, daß vom Behälter (1) eine Kreisleitung (2) ausgeht und in ihn einmündet, daß die Kreisleitung (2) eine UV-Bestrahlungskomponente (5) enthält, und daß eine Zuleitung (7) für ein Oxidationsmittel, die eine Dosiervorrichtung (8) umfaßt, und ein Kationenaustauscher (10) der Kreisleitung (2) zugeordnet sind.

12. Einrichtung nach Anspruch 11,
    **dadurch gekennzeichnet**, daß eine Zuleitung (3) für eine Eisenionen enthaltende Lösung, die eine Dosiervorrichtung (4) umfaßt, der Kreisleitung (2) zugeordnet ist.

## Claims

1. Method for disposing of an aqueous solution which contains an organic acid and an iron complex and occurs particularly in the case of the decontamination of radioactively contaminated surfaces of building components, characterised in that the solution is irradiated with UV-light, as a result of which the iron complex is reduced and a dissolved iron salt and carbon dioxide are formed, in that a portion of the dissolved iron salt is removed from the solution by means of a cation exchanger, in that water and more of the iron complex are formed from another portion of the dissolved iron salt, a portion of the acid and an added oxidising agent, and in that the remaining solution, which contains the iron complex and organic acid which has not yet been destroyed, is again irradiated with UV-light, continuing in a cyclic process until no more organic acid remains.

2. Method according to claim 1, characterised in that in order to convert a portion of the acid into an iron complex, ionised iron is added to the solution.

3. Method according to claim 2, characterised in that the portion of the acid is converted by ionised iron of a certain valency into an iron complex of the same valency.

4. Method according to claim 3, characterised in that the portion of the acid is converted by ionised trivalent iron into an iron (III) complex.

5. Method according to one of the claims 1 to 4, characterised in that there is formed from the iron complex in the solution a dissolved iron salt, the valency of which is lower by 1 than the valency of the iron complex.

6. Method according to claim 5, characterised in that there is formed from an iron (III) complex in the solution a dissolved bivalent iron salt, a portion of the dissolved bivalent iron salt is removed from the solution by means of a cation exchanger, and the iron (III) complex is formed again from another portion of the dissolved iron salt.

7. Method according to one of the claims 1 to 6, characterised in that the oxidising agent is hydrogen peroxide or ozone.

8. Method according to one of the claims 1 to 7, characterised in that the concentration of the oxidising agent is between 0.002 mol/l and 0.02 mol/l.

9. Method according to claim 8, characterised in that the concentration of the oxidising agent is between 0.005 mol/l and 0.007 mol/l.

10. Method according to one of the claims 1 to 9, characterised in that the UV-light has a wavelength between 250 nm and 350 nm.

11. Device for disposing of an aqueous solution by a method according to one of the claims 1 to 10, having a container (1) for the solution which contains an organic acid and an iron complex and occurs particularly in the case of the decontamination of radioactively contaminated surfaces of building components, characterised in that a circular line (2) starts from the container (1) and opens out into the same, in that the circular line (2) contains a UV-irradiation component (5), and in that a supply line (7) for an oxidising agent, which supply line comprises a dosing device (8), and a cation exchanger (10) are allocated to the circular line (2).

12. Device according to claim 11, characterised in that a supply line (3) for a solution which contains iron ions, which supply line comprises a dosing device (4), is allocated to the circular line (2).

## Revendications

1. Procédé d'élimination d'une solution aqueuse qui contient un acide organique et un complexe du fer et qui est obtenu en particulier lors de la décontamination de surfaces d'éléments de construction contaminés par de la radioactivité, caractérisé en ce que la solution est irradiée par de la lumière U.V., ce qui réduit le complexe du fer et forme un sel de fer solubilisé et du dioxyde de carbone, en ce qu'une partie du sel de fer solubilisé est éliminée de la solution au moyen d'un échangeur cationique, en ce qu'à partir d'une autre partie du sel de fer solubilisé, d'une partie de l'acide et d'un agent d'oxydation ajouté sont formés de l'eau et de nouveau le complexe du fer et en ce que la solution résiduelle contenant le complexe du fer et l'acide organique non encore détruit est de nouveau irradiée par de la lumière U.V. et en ce qu'on continue ce cycle jusqu'à ce qu'il n'y ait plus d'acide organique.

2. Procédé selon la revendication 1, caractérisé en ce qu'on ajoute, à la solution, du fer ionisé pour la transformation d'une partie de l'acide en un complexe du fer.

3. Procédé selon la revendication 2, caractérisé en ce que la partie de l'acide est transformée par du fer ionisé d'une valence déterminée en un complexe du fer de la même valence.

4. Procédé selon la revendication 3, caractérisé en ce que la partie de l'acide est transformée par du fer ionisé trivalent en un complexe de fer III.

5. Procédé selon l'une des revendications 1 à 4, caractérisé en ce qu'on forme à partir du complexe du fer dans la solution, un sel de fer solubilisé dont la valence est inférieure d'une unité à la valence du complexe du fer.

6. Procédé selon la revendication 5, caractérisé en ce qu'on forme à partir d'un complexe de fer III dans la solution, un sel de fer solubilisé divalent, en ce qu'on enlève une partie du sel de fer solubilisé divalent de la solution au moyen d'un échangeur cationique et en ce qu'on forme à partir d'une autre partie du sel de fer solubilisé de nouveau le complexe de fer III.

7. Procédé selon l'une des revendications 1 à 6, caractérisé en ce que l'agent d'oxydation est le peroxyde d'hydrogène ou l'ozone.

8. Procédé selon l'une des revendications 1 à 7, caractérisé en ce que la concentration de l'agent d'oxydation se situe entre 0,002 mole/l et 0,02 mole/l.

9. Procédé selon la revendication 8, caractérisé en ce que la concentration de l'agent d'oxydation se situe entre 0,005 mole/l et 0,007 mole/l.

10. Procédé selon l'une des revendications 1 à 9, caractérisé en ce que la lumière U.V. présente une longueur d'onde entre 250 nm et 350 nm.

11. Dispositif d'élimination d'une solution aqueuse par un procédé selon l'une des revendications 1 à 10, avec un récipient (1) pour la solution, qui contient l'acide organique et un complexe du fer et qui est obtenue en particulier lors de la décontamination de surfaces d'éléments de construction contaminés par de la radioactivité, caractérisé en ce qu'une conduite de recirculation (2) part du récipient (1) et y débouche, en ce que la conduite de recirculation (2) contient un composant d'irradiation par rayons U.V. (5), et en ce qu'une conduite d'alimentation (7) pour un agent d'oxydation comprend un dispositif de dosage (8), et en ce qu'un échangeur cationique (10) est attribué à la conduite de recirculation (2).

12. Dispositif selon la revendication 11, caractérisé en ce qu'une conduite d'alimentation (3) pour une solution contenant des ions de fer, qui comprend un dispositif de dosage (4), est attribuée à la conduite de recirculation (2).